# EUROPÄISCHE PATENTSCHRIFT

(11) **EP 0 405 070 B1**
(45) Veröffentlichungstag und Bekanntmachung des Hinweises auf die Patenterteilung: **17.03.1993**
(21) Anmeldenummer: 90106602.7
(22) Anmeldetag: 06.04.1990
(51) Int. Cl.: G01L 9/00

(54) **Plattenförmiger Drucksensor**
Flattened pressure sensor
Capteur de pression aplati

(30) Priorität: 27.06.1989 DE 3921050
(43) Veröffentlichungstag der Anmeldung: 02.01.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Sandmaier, Hermann, Dr.-Ing., D-8384 Simbach (DE)
(74) Vertreter: Schoppe, Fritz, Dipl.-Ing.

(56) Entgegenhaltungen:
- DE-B- 2 903 253
- US-A- 4 287 772
- PATENT ABSTRACTS OF JAPAN vol. 7, no. 176 (P-214)(1321) 4. August 1983 & JP-A-58 082 138

## Beschreibung

Die vorliegende Erfindung betrifft einen plattenförmigen Drucksensor nach dem Oberbegriff der Patentansprüche 1 und 2.

Insbesondere befaßt sich die vorliegende Erfindung mit einer kostengünstig herstellbaren plattenförmigen Drucksensorstruktur für den Einsatz im niederen und im mittleren Druckbereich, die in Siliziumtechnologie herstellbar ist.

Ein gattungsgemäßer Drucksensor ist aus der DD-A-267105 bekannt. Bei diesem Sensor hat zwar die Ausnehmung, die die Membranfläche festlegt, zusätzliche Ausbuchtungen, in denen die Dehnungsmeßstreifen liegen. Durch diese Ausbuchtungen hat die Membran in der durch die an entgegengesetzten Enden angeordneten Dehnungsmeßstreifen festgelegten Richtung eine Abmessung, die ihre sonst gleichmäßig radiale Abmessung überschreitet. Doch wird durch diese Art der Ausgestaltung eine Breite des Flächenbereiches oder Membranbereiches in der durch die Meßbereiche festgelegten Richtung gebildet, die größer als die Breite des Flächenbereiches zwischen dem Grundkörper und dem Versteifungsbereich in Querrichtung zu der durch die entgegengesetzten Meßbereiche festgelegten Richtung ist. Die Anordnung der Sensoren in Ausbuchtungen außerhalb des eigentlichen Membranbereiches mag zwar zu der in dieser DD-A-267105 geforderten Reduktion des Linearitätsfehlers bei Drucksensoren führen, kann jedoch nicht zu einer gewünschten Verkleinerung des Sensors bei gegebener Empfindlichkeit beitragen. Kurz gesagt lehrt diese Schrift den Fachmann, die Breite des Flächenbereichs zwischen dem Grundkörper und dem Versteifungbereich gegenüber standardmäßigen Drucksensoren zu vergrößern und nicht zu vermindern.

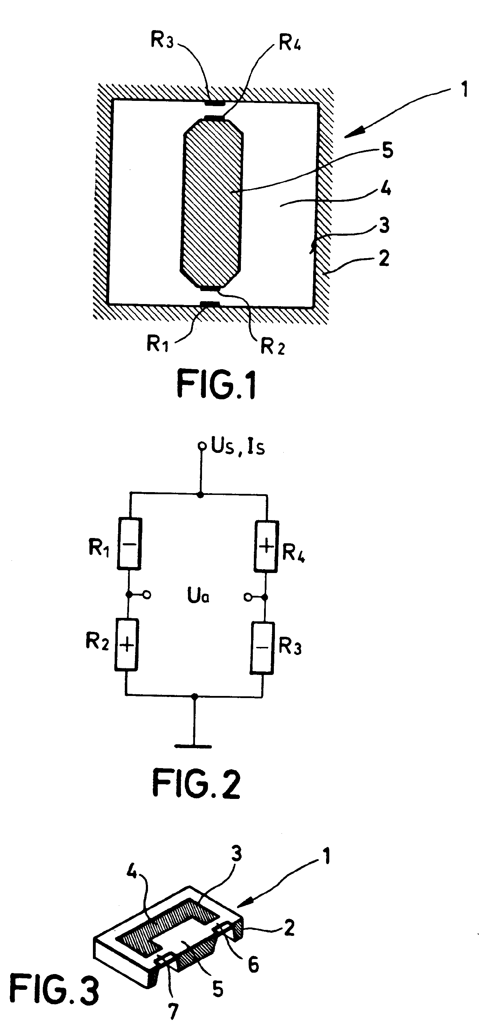

Ein derartiger, bekannter Drucksensor, dessen schematische Draufsichtdarstellung in Fig. 1 und dessen Beschaltung in Fig. 2 gezeigt ist, ist offenbart in der Dissertation des Erfinders des Gegenstandes der vorliegenden Anmeldung, H. Sandmaier, Untersuchung des nichtlinearen Verhaltens piezoresistiver Niederdrucksensoren auf der Basis von Silizium, Dissertation, TU München, 1988. Dieser bekannte, in Fig. 1 in Draufsicht dargestellte Drucksensor ist in seiner Gesamtheit mit dem Bezugszeichen 1 bezeichnet und umfasst einen Grundkörper 2, der eine quadratische Ausnehmung 3 aufweist, einen die Ausnehmung 3 überdeckenden biegbaren Flächenbereich 4, einen mit dem biegbaren Flächenbereich 4 verbundenen Versteifungsbereich 5, der im wesentlichen rechteckförmig ausgestaltet ist, sowie, vier transversale Dehnungswiderstandssensoren R ₁ bis R ₄, die im Bereich der einander entgegengesetzten Schmalseiten des Versteifungsbereiches 5 auf dem biegsamen Flächenbereich 4 zwischen dem Grundkörper 2 und dem Versteifungsbereich 5 angeordnet sind.

Ein derartiger Drucksensor ist auch in der JP-A-58 082 138 offenbart.

Fig. 2 zeigt die Anordnung der vier transversalen Dehnungswiderstandssensoren R ₁ bis R ₄ des bekannten Drucksensors gemäß Fig. 1 in einer an sich bekannten Wheatstone'schen Brückenschaltung. Diese trägt zur Verminderung von Linearitätsfehlern des Drucksensors 1 im Niederdruckbereich und zur Kompensation weiterer vorzeichengleicher Fehlerfaktoren bei.

Drucksensoren der in Figur 1 gezeigten Art werden zur Absolutdruckmessung und Differenzdruckmessung in den Druckbereichen von ca. 0,01 bis 1000 bar eingesetzt. Derartige Drucksensoren besitzen im mittleren Druckbereich bei einem Linearitätsfehler von 0,1 % bis 0,2 % Empfindlichkeiten von ca. 30 mV/V F.S.O. Allgemein tritt beim Entwurf von Niederdrucksensoren das Problem auf, daß ein Kompromiß zwischen deren Empfindlichkeit und deren Linearitätsfehler getroffen werden muß. Zur Reduktion des Linearitätsfehlerbeitrages wird in der genannten Dissertation die günstigste Plattengeometrie mit Hilfe der Methode der finiten Elemente bei Drucksensoren mit einem bzw. zwei Versteifungsbereichen 5 untersucht. Als Ergebnis dieser Untersuchung gibt die zitierte Dissertation als günstigste Plattengeometrie für Niederdrucksensoren eine quadratische Platte an, also einen Drucksensor 1, bei dem die Ausnehmnung 3 des Grundkörpers 2 in Draufsicht quadratisch ist.

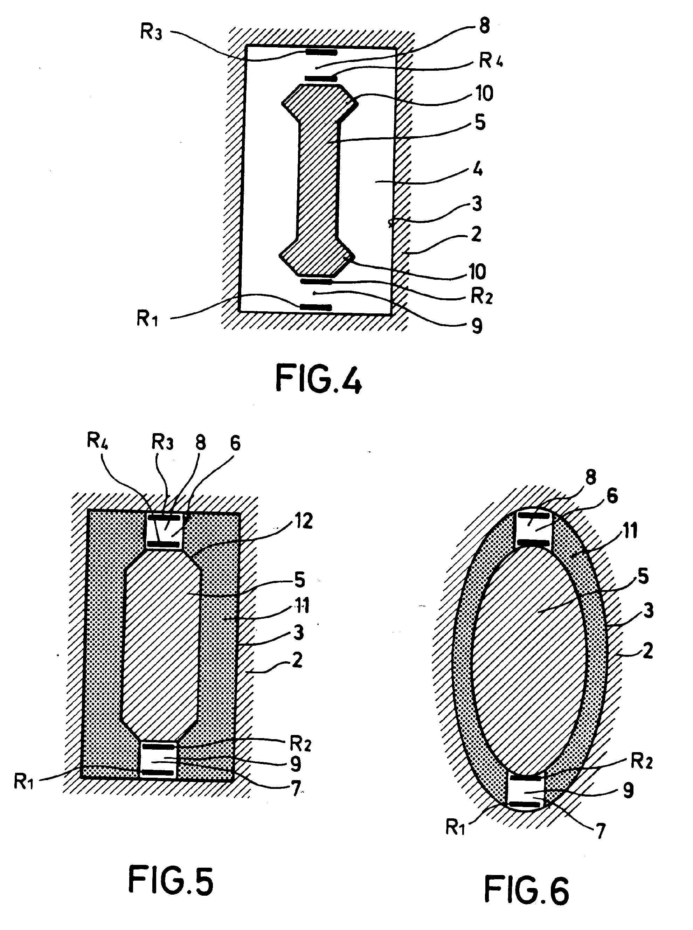

Auch aus der Fachveröffentlichung H. Reimann, Empfindlich und klein in Silizium, Sensormagazin, Nr. 4, 1988, ist ein derartiger Drucksensor bekannt, der in Fig. 3 der vorliegenden Anmeldung in perspektivischer Schnittdarstellung gezeigt ist. Dieser Drucksensor kann als Brückentyp-Drucksensor bezeichnet werden und umfasst in Übereinstimmung mit der in Fig. 1 gezeigten Ausführungsform einen Grundkörper 2 mit einer Ausnehmung 3, die in Draufsicht quadratisch ist, einem die Ausnehmung 3 überspannenden biegsamen Flächenbereich 4, der membranartig ausgestaltet ist, einen hier amboßartig ausgeführten Versteifungsbereich 5 sowie in Abweichung zu der bekannten Sensorgestalt gemäß Fig. 1 zwei Balkenbereiche 6, 7, auf denen (nicht dargestellt) longitudinale Dehnungswiderstandssensoren angeordnet sind.

Im Hinblick auf diesen Stand der Technik liegt der vorliegenden Erfindung die Aufgabe zugrunde, einen plattenförmigen Drucksensor der eingangs genannten Art so weiter zu bilden, daß er mit einer verminderten Sensorfläche trotz hoher Druckempfindlichkeit ausführbar ist.

Diese Aufgabe wird bei einem plattenförmigen Drucksensor nach dem Oberbegriff der Patentansprüche 1 und 2 durch die im kennzeichnenden Teil dieser Ansprüche angegebenen Merkmale gelöst.

Der vorliegenden Erfindung liegt die Erkenntnis zugrunde, daß die Breite der Ausnehmung 3 in der Richtung quer zu der Richtung, die durch die entgegengesetzten Meßbereiche am Ort der Dehnungswiderstandssensoren festgelegt ist, nur einen geringfügigen Einfluß auf die Höhe der auftretenden mechanischen Spannungen innerhalb der Meßbereiche hat. Somit gelangt die Erfindung zu dem Schluß, daß bei im wesentlichen unveränderter Beibehaltung der Meßempfindlichkeit eines gattungsgemäßen Drucksensors der Flächenbedarf für den Drucksensorchip verminderbar ist, indem die Abmessung der Ausnehmung 4 in einer durch die entgegengesetzten Meßbereiche festgelegten Richtung größer ist als die Abmessung in der Querrichtung hierzu. Dadurch, daß bei dem erfindungsgemäßen Drucksensor die Breite des Flächenbereichs zwischen den Innenkanten des Grundkörpers und den Außenkanten des Versteifungsbereiches in der durch die Meßbereiche festgelegten Richtung kleiner ist als diejenige des Flächenbereiches zwischen dem Grundkörper und dem Versteifungbereich in Querrichtung hierzu, und daß die Abmessung der Ausnehmung in der durch die Meßbereiche festgelegten Richtung größer ist als ihre Abmessung in Querrichtung hierzu, wird eine Konzentration der Dehnungen des membranartigen Flächenbereiches am Ort der Dehnungswiderstandssensoren erreicht, wodurch bei gegebener, geforderter Druckmeßempfindlichkeit die Fläche des Drucksensors vermindert werden kann.

Bevorzugte Weiterbildungen des erfindungsgemäßen Drucksensors sind Gegenstand der abhängigen Ansprüche 3 bis 7.

Nachfolgend werden unter Bezugnahme auf die beiliegenden Zeichnungen bevorzugte Ausführungsformen des erfindungsgemäßen Drucksensors näher erläutert. Es zeigen:
Fig. 1 eine Draufsicht auf einen Drucksensor nach dem Stand der Technik;
Fig. 2 ein Schaltbild der Widerstandsmeßbrücke des Drucksensors gemäß Fig. 1;
Fig. 3 eine perspektivische Schnittdarstellung eines weiteren bekannten Drucksensors;
Fig. 4 eine erste Ausführungsform des erfindungsgemäßen Drucksensors;
Fig. 5 eine zweite Ausführungsform des erfindungsgemäßen Drucksensors; und
Fig. 6 eine dritte Ausführungsform des erfindungsgemäßen Drucksensors.

In den Figuren 4 bis 6 bezeichnen Bezugszeichen, die mit den Bezugsseichen nach den Figuren 1 und 3 übereinstimmen, gleiche oder ähnliche Teile, so daß eine erneute Beschreibung dieser Teile entfallen kann.

Bei dem erfindungsgemäßen plattenförmigen Drucksensor 1 ist die Abmessung der Ausnehmung 3 in einer durch die entgegengesetzten Meßbereiche 8, 9 festgelegten Richtung größer als deren Abmessung in der Querrichtung hierzu. Als Meßbereiche 8, 9 werden diejenigen Bereiche verstanden, in denen die Dehnungswiderstandssensoren R ₁, R ₂, R ₃, R ₄ angeordnet sind. Entsprechend ist die Breite des gesamten plattenförmigen Drucksensors 1 gemäß der vorliegenden Erfindung in der oben definierten Querrichtung geringer als dies beim Sensor nach dem Stand der Technik der Fall ist, ohne daß eine wesentliche Verminderung der Drucksensorempfindlichkeit in Kauf genommen werden muß.

Bei der Ausführungsform gemäß Fig.4 weist der biegbare Bereich 4 über seine Gesamtfläche eine gleichbleibende Dicke auf. Wenn eine derartige Ausgestaltung des Flächenbereiches 4 gewählt wird, muß die Breite des Flächenbereiches 4 zwischen den Innenkanten des Grundkörpers 2, die durch die Ausnehmung 3 festgelegt sind, und den Außenkanten des Versteifungsbereiches 5 in der durch die entgegengesetzten Meßbereiche 8, 9 festgelegten Richtung kleiner sein als die Breite des Flächenbereiches 4 zwischen dem Grundkörper 2 und dem Versteifungsbereich 5 in Querrichtung zu der durch die entgegengesetzten Meßbereiche 8, 9 fest gelegten Querrichtung. Somit kann bei einer derartigen Struktur des biegbaren Bereiches 4 die Abmessung des Drucksensors in der Querrichtung zu der durch die entgegengesetzten Meßbereiche 8, 9 festgelegten Richtung nur bis zu einem bestimmten Mindestwert vermindert werden, so daß auch der möglichen Flächenreduktion, die durch das erfindungsgemäße Drucksensordesign möglich ist, bei dieser Art der Ausgestaltung des biegsamen Flächenbereiches Grenzen gesetzt sind.

Die in Fig. 4 gezeigte rechteckförmige Gestaltung der Ausnehmung 3 ist fertigungstechnisch besonders einfach zu realisieren. Von einer derartigen rechteckförmigen Ausgestaltung der Ausnehmung 3 kann jedoch abgewichen werden, so lange die Gesamtabmessung der Ausnehmung in der durch die entgegengesetzten Meßbereiche festgelegten Richtung größer ist als deren Abmessung in der Querrichtung hierzu.

Bei der in Fig. 4 gezeigten Ausführungsform weist der Versteifungsbereich 5 an seinen in Längsrichtung entgegengesetzten Enden keulenartige Verbreiterungen 10 auf, was bei Verwendung einer biegsamen Fläche 4 mit gleichbleibender Dicke zu einer wünschenswerten Krafteinleitung vom biegsamen Bereich 4 in den Versteifungsbereich 5 führt.

Bei der Ausgestaltung gemäß Fig. 4 hat der Flächenbereich 4 eine über die Fläche im wesentlichen gleichbleibende Dicke. Von dieser Ausgestaltung des biegbaren Flächenbereiches kann jedoch mit Vorteilen für die Funktion des Drucksensors abgewichen werden, wie die nachfolgende Erläuterung der Ausführungsformen gemäß den Figuren 5 und 6 zeigen wird.

Bei diesen Ausführungsformen liegen die Meßbereiche 8, 9 auf Balkenbereichen 6, 7, die vom Grundkörper 2 in den Versteifungsbereich 5 übergehen und eine größere Dicke aufweisen als der übrige, zu einer Membran 11 reduzierte biegsame Flächenbereich 4. Bei dieser Struktur ist der Flächenbereich 4 im Bereich der Membrane 11 derartig dünn ausgebildet, daß eine druckbedingte Sensorauslenkung im Versteifungsbereich 5 im wesentlichen zu einer reinen Dehnungsspannungsbeanspruchung der Membrane 11 bei vernachlässigbarer Biegungsspannungsbeanspruchung der Membrane 11 führt, während die Balkenbereiche 6, 7 im wesentlichen auf Biegung beansprucht werden. Diese Biegungsbeanspruchung läßt sich meßtechnisch sehr gut über vier transversale Dehnungswiderstandssensoren in Wheatstone'scher Brückenschaltung erfassen, wie diese in Fig. 2 gezeigt ist.

Bei dieser Ausgestaltung des biegbaren Flächenbereiches 4 mit einer Membrane 11 und Balkenbereichen 6, 7 kann sogar die Breite der Membrane 11 zwischen dem Grundkörper 2 und dem Versteifungsbereich 5 in der Querrichtung zu der durch die Meßbereiche 8, 9 festgelegten Richtung kleiner sein als der Abstand zwischen dem Grundkörper 2 und dem Versteifungsbereich 5 in der durch die Meßbereiche 8, 9 definierten Richtung. Dies ermöglicht eine weitere Reduktion der für den Drucksensor erforderlichen Fläche.

Die bei den Ausführungsformen gemäß den Figuren 5 und 6 eingesetzte Kombination der Membran 11 mit den Balkenbereichen 6, 7 als biegsamer Flächenbereich 4 führt zu einem Verhalten, bei dem für kleine Auslenkungen des Versteifungsbereiches 5, die im Nenndruckbereich des Sensors liegen, die Energie vornehmlich in den Meßbereichen 8, 9 als Biegespannung aufgenommen wird, so daß die Nichtlinearität und Empfindlichkeit des Drucksensorausgangssignales innerhalb des Nenndruckbereiches durch Dimensionierung der Balkenbereiche 6, 7 eingestellt werden kann. Bei größeren Auslenkungen des Versteifungsbereiches 5 wird die Energie im wesentlichen durch eine Zunahme der Membranspannung der Membran 11 aufgenommen, was zu einer erheblichen Erhöhung des Überlastbereiches des erfindungsgemäßen Drucksensors 1 beiträgt.

Bei der Ausführungsform gemäß Fig. 5 geht der Versteifungsbereich 5 mit sich verjüngenden Abschrägungen 12 in die Balkenbereiche über.

Die Ausführungsform gemäß Fig. 6 unterscheidet sich von derjenigen gemäß Fig. 5 im wesentlichen dadurch, daß sowohl der Versteifungsbereich 5 als auch die Ausnehmung 3 des Grundkörpers 2 elliptisch ausgestaltet sind.

Als Material zur Herstellung der erfindungsgemäßen Drucksensoren wird üblicherweise Silizium eingesetzt, da die Strukturierung des gesamten Drucksensors in diesem Fall mit leicht beherrschbaren, dem Fachmann an die Hand gegebenen Verfahrensmaßnahmen vorgenommen werden kann. Denkbar ist jedoch auch die Fertigung derartiger Drucksensorelemente beispielsweise aus Keramiken.

## Patentansprüche

1. Plattenförmiger Drucksensor, insbesondere für den niederen und mittleren Druckbereich, mit
- einem eine Ausnehmung (3) aufweisenden Grundkörper (2),
- einem die Ausnehmung (3) überdeckenden biegbaren Flächenbereich (4),
- einem mit dem biegbaren Flächenbereich (4) verbundenen Versteifungsbereich (5), und
- wenigstens zwei Dehnungswiderstandssensoren (R₁, R₂, R₃, R₄), die an zwei aneinander bezüglich des Versteifungsbereiches (5) entgegengesetzten Meßbereichen (8, 9) auf dem biegsamen Flächenbereich (4) zwischen dem Grundkörper (2) und dem Versteifungsbereich (5) angeordnet sind, um ein den den Drucksensor beaufschlagenden Druck darstellendes Signal zu erzeugen,
- wobei die Breite des Flächenbereiches (4) zwischen dem Grundkörper (2) und dem Versteifungsbereich (5) in der durch die entgegengesetzten Meßbereiche (8, 9) festgelegten Richtung kleiner ist als die Breite des Flächenbereiches (4) zwischen dem Grundkörper (2) und dem Versteifungsbereich (5) in Querrichtung zu der durch die entgegengesetzen Meßbereiche (8, 9) festgelegten Richtung,
dadurch gekennzeichnet,
- daß die Abmessung der Ausnehmung (3) in der durch die entgegengesetzten Meßbereiche (8, 9) festgelegten Richtung größer ist als deren Abmessung in Querrichtung hierzu.

2. Plattenförmiger Drucksensor, insbesondere für den niederen und mittleren Druckbereich, mit
- einem eine Ausnehmung (3) aufweisenden Grundkörper (2),
- einem die Ausnehmung (3) überdeckenden biegbaren Flächenbereich (4),
- einem mit dem biegbaren Flächenbereich (4) verbundenen Versteifungsbereich (5), und
- wenigstens zwei Dehnungswiderstandssensoren (R₁, R₂, R₃, R₄), die an zwei einander bezüglich des Versteifungsbereiches (5) entgegengesetzten Meßbereichen (8, 9) auf dem biegsamen Flächenbereich (4) zwischen dem Grundkörper (2) und dem Versteifungsbereich (5) angeordnet sind, um ein den den Drucksensor beaufschlagenden Druck darstellendes Signal zu erzeugen, wobei der Flächenbereich (4) an den Meßbereichen (8, 9) Balkenbereiche (6, 7) aufweist, die eine gegenüber der Dicke des Flächenbereiches (4, 11) außerhalb der Balkenbereiche (6, 7) größere Dicke aufweisen,
dadurch gekennzeichnet,
- daß die Abmessung der Ausnehmung (3) in einer durch die entgegengesetzten Meßbereiche (8, 9) festgelegten Richtung größer ist als deren Abmessung in Querrichtung hierzu, und
- daß der Flächenbereich (4) außerhalb der Balkenbereiche (6, 7) derartig membranförmig dünn ausgebildet ist, daß eine druckbedingte Sensorauslenkung im Versteifungsbereich (5) im wesentlichen zu einer Dehnungsspannungsbeanspruchung des Flächenbereiches (4) außerhalb der Balkenbereiche (6, 7) bei hierzu vernachlässigbarer Biegungsspannungsbeanspruchung desselben führt.

3. Drucksensor nach Anspruch 1 oder 2,
dadurch gekennzeichnet,
- daß der Flächenbereich (4) eine über dessen Fläche im wesentlichen gleichbleibende Dicke aufweist, und
- daß die Breite des Flächenbereiches (4) zwischen dem Grundkörper (2) und dem Versteifungsbereich (5) in der durch die entgegengesetzten Meßbereiche (8, 9) festgelegten Richtung kleiner ist als die Breite des Flächenbereichs zwischen dem Grundkörper (2) und dem Versteifungsbereich (5) in der Querrichtung hierzu.

4. Drucksensor nach einem der Ansprüche 1 bis 3,
dadurch gekennzeichnet,
daß die Ausnehmung (3) rechteckförmig ist.

5. Drucksensor nach einem der Ansprüche 1 bis 3,
dadurch gekennzeichnet,
daß die Ausnehmung (3) und der Versteifungsbereich (5) jeweils elliptisch sind.

6. Drucksensor nach Anspruch 4 oder 5,
dadurch gekennzeichnet,
daß der Versteifungsbereich (5) in der durch die entgegengesetzten Meßbereiche (6, 7) festgelegten Richtung eine höhere Abmessung aufweist als in der Querrichtung hierzu.

7. Drucksensor nach einem der Ansprüche 1 bis 6,
dadurch gekennzeichnet,
daß vier transversale Dehnungswiderstandssensoren (R₁, R₂, R₃, R₄) in Wheatston'scher Brückenschaltung vorgesehen sind.

## Claims

1. A platelike pressure sensor, in particular for use in the low and middle pressure regions, comprising
- a basic element (2) provided with a recess (3),
- a flexible surface region (4) covering said recess (3),
- a stiffening region (5) connected to said flexible surface region (4), and
- at least two strain resistance sensors (R₁, R₂, R₃, R₄), which are arranged at two measuring areas (8, 9) positioned in opposed relationship with respect to the stiffening region (5) on the flexible surface region (4) between the basic element (2) and the stiffening region (5), so as to produce a signal representative of the pressure acting on the pressure sensor,
- the width of the surface region (4) between the basic element (2) and the stiffening region (5) being, in the direction determined by the opposed measuring areas (8, 9), smaller than the width of the surface region (4) between the basic element (2) and the stiffening region (5) in the direction transversely to the direction determined by said opposed measuring areas (8, 9),
**characterized in**
- that the dimension of the recess (3) is, in the direction determined by said opposed measuring areas (8, 9), larger than the dimension of said recess (3) in the transverse direction thereto.

2. A platelike pressure sensor, in particular for use in the low and middle pressure regions, comprising
- a basic element (2) provided with a recess (3),
- a flexible surface region (4) covering said recess (3),
- a stiffening region (5) connected to said flexible surface region (4), and
- at least two strain resistance sensors (R₁, R₂, R₃, R₄), which are arranged at two measuring areas (8, 9) positioned in opposed relationship with respect to the stiffening region (5) on the flexible surface region (4) between the basic element (2) and the stiffening region (5), so as to produce a signal representative of the pressure acting on the pressure sensor, said surface region (4) being provided with bar regions (6, 7) at said measuring areas (8, 9) and said bar regions (6, 7) having a thickness which exceeds the thickness of the surface region (4, 11) outside of said bar regions,
**characterized in**
- that the dimension of the recess (3) is, in a direction determined by said opposed measuring areas (8, 9), larger than the dimension of said recess (3) in the transverse direction thereto, and
- that, outside of the bar regions (6, 7), the surface region (4) has a diaphragmlike, thin structural design of such a nature that a deflection of the sensor in the stiffening region (5) caused by pressure will essentially have the effect that the surface region (4) outside of the bar regions (6, 7) is subjected to a tensile stress load, whereas the bending stress load acting on said surface region (4) outside of the bar regions (6, 7) is negligible.

3. A pressure sensor according to claim 1 or 2,
**characterized in**
- that the surface region (4) has a thickness which is essentially uniform throughout the area thereof, and
- that the width of the surface region (4) between the basic element (2) and the stiffening region (5) is, in the direction determined by the opposed measuring areas (8, 9), smaller than the width of said surface region between said basic element (2) and said stiffening region (5) in the transverse direction thereto.

4. A pressure sensor according to one of the claims 1 to 3,
**characterized in**
that the recess (3) is rectangular in shape.

5. A pressure sensor according to one of the claims 1 to 3,
**characterized in**
that the recess (3) and the stiffening region (5) are each ellipitical.

6. A pressure sensor according to claim 4 or 5,
**characterized in**
that, in the direction determined by the opposed measuring areas (6, 7), the dimension of the stiffening region (5) is higher than in the transverse direction thereto.

7. A pressure sensor according to one of the claims 1 to 6,
**characterized in**
that four transversal strain resistance sensors (R₁, R₂, R₃, R₄) are arranged in a Wheatstone bridge circuit.

## Revendications

1. Capteur de pression aplati, en particulier pour la plage de basses et moyennes pressions, avec
- un corps de base (2) présentant un évidement (3),
- une zone de surface souple (4) recouvrant l'évidement (3),
- une zone de renforcement (5) reliée à la zone de surface souple (4), et
- au moins deux capteurs de résistance à la contrainte (R₁. R₂, R₃, R₄) disposés sur la zone de surface souple (4) entre le corps de base (2) et la zone de renforcement (5), à deux zones de mesure (8, 9) opposées l'une à l'autre par rapport à la zone de renforcement (5), afin de produire un signal représentant la pression alimentée vers le capteur de pression,
la largeur de la zone de surface (4) entre le corps de base (2) et la zone de renforcement (5), dans la direction déterminée par les zones de mesure opposées (8, 9), étant plus petite que la largeur de la zone de surface (4) entre le corps de base (2) et la zone de renforcement (5), dans le sens transversal à la direction déterminée par les zones de mesure opposées (8, 9),
caractérisé en ce que la dimension de l'évidement (3), dans le sens déterminé par les zones de mesure opposées (8, 9) est plus grande que sa dimension dans le sens transversal à cette dernière.

2. Capteur de pression aplati, en particulier pour la plage de basses et moyennes pressions, avec
- un corps de base (2) présentant un évidement (3),
- une zone de surface souple (4) recouvrant l'évidement (3),
- une zone de renforcement (5) reliée à la zone de surface souple (4), et
- au moins deux capteurs de résistance à la contrainte (R₁. R₂, R₃, R₄) disposés sur la zone de surface souple (4) entre le corps de base (2) et la zone de renforcement (5), à deux zones de mesure (8, 9) opposées l'une à l'autre par rapport à la zone de renforcement (5), afin de produire un signal représentant la pression alimentée vers le capteur de pression, la zone de surface (4) présentant, aux zones de mesure (8, 9), des zones de poutre (6, 7) qui présentent, par rapport à l'épaisseur de la zone de surface (4, 11) en dehors des zones de poutres (6, 7), une épaisseur supérieure,
caractérisé en ce que la dimension de l'évidement (3), dans le sens déterminé par les zones de mesure opposées (8, 9) est plus grande que sa dimension dans le sens transversal à cette dernière, et
que la zone de surface (4) en dehors des zones de poutres (6, 7) se présente en forme de membrane d'une minceur telle qu'un déplacement latéral du capteur, dû à la pression, dans la zone de renforcement (5) conduit sensiblement à une sollicitation de tension de la zone de surface (4) en dehors des zones de poutres (6, 7) pour une sollicitation de flexion négligeable de celle-ci par rapport à cette dernière.

3. Capteur de pression suivant la revendication 1 ou 2, caractérisé en ce
- que la zone de surface (4) présente une épaisseur restant sensiblement constante sur toute sa surface, et
- que la largeur de la zone de surface (4) entre le corps de base (2) et la zone de renforcement (5), dans la direction déterminée par les zones de mesure opposées (8, 9), est plus petite que la largeur de la zone de surface entre le corps de base (2) et la zone de renforcement (5), dans le sens transversal à cette dernière.

4. Capteur de pression suivant l'une des revendicatione 1 à 3, caractérisé en ce que l'évidement (3) est de forme rectangulaire.

5. Capteur de pression suivant l'une des revendications 1 à 3, caractérisé en ce que l'évidement (3) et la zone de renforcement (5) sont chaque fois elliptiques.

6. Capteur de pression suivant la revendication 4 ou 5, caractérisé en ce que la zone de renforcement (5), dans la direction déterminée par les zones de mesure opposées (6, 7), présent une dimension supérieure à celle dans le sens transversal à cette dernière.

7. Capteur de pression suivant l'une des revendications 1 à 6, caractérisé en ce qu'il est prévu quatre capteurs de résistance à la contrainte transversale (R₁. R₂, R₃, R₄) dans un circuit en pont de Wheatstone.
